(19) Europäisches Patentamt
European Patent Office
Office européen des brevets

(11) **EP 2 327 132 B1**

(12) **EUROPEAN PATENT SPECIFICATION**

(45) Date of publication and mention
of the grant of the patent:
**19.12.2018 Bulletin 2018/51**

(51) Int Cl.:
*H02J 1/10* (2006.01)     *H02J 9/06* (2006.01)

(21) Application number: **09785644.7**

(22) Date of filing: **14.09.2009**

(86) International application number:
**PCT/GB2009/051190**

(87) International publication number:
**WO 2010/029375 (18.03.2010 Gazette 2010/11)**

(54) **REDUNDANT POWER SUPPLY**

REDUNDANTE STROMVERSORGUNG

BLOC D'ALIMENTATION REDONDANT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **15.09.2008 GB 0816844**

(43) Date of publication of application:
**01.06.2011 Bulletin 2011/22**

(73) Proprietor: **Cooper Technologies Company
Houston, TX 77002 (US)**

(72) Inventors:
• **LAMPARD, Melvyn, James
Royston,
Hertfordshire SG8 9JA (GB)**
• **WEAVER, Russell, Douglas
Hitchin,
Hertfordshire SG5 1XQ (GB)**

(74) Representative: **Gill, David Alan
WP Thompson
138 Fetter Lane
London EC4A 1BT (GB)**

(56) References cited:
**EP-A- 0 997 831**     **WO-A-03/041239**
**WO-A-2007/088387**     **US-A1- 2004 252 428**

**Description**

The present invention relates to a redundant power supply and in particular to redundancy in intrinsically safe circuits and further to a method and apparatus for multiplexing a plurality of intrinsically safe outputs for the purpose of functional redundancy in intrinsically safe circuits.

Industrial hazardous environments can comprise locations where potentially explosive mixtures of gases or fine powders are situated.

Intrinsic safety is a concept that is used to prevent electrical equipment from causing explosions in hazardous environments. An Intrinsically Safe (IS) system includes an IS device located in the hazardous environment (known as a field circuit or field device), a power limiting device (IS barrier or galvanic isolator) located in a non-hazardous area (or safe area) between an electrical power supply and the IS device, and the associated wiring. In an intrinsically safe system, all of the equipment is designed and installed in such a way that cannot supply sufficient energy or power to cause ignition of the potentially explosive gas mixture, even in a fault condition.

Reliability is a particularly important factor for IS systems where ease of access to field devices is often very limited, and failure of critical components could not only be costly but also potentially highly dangerous. Redundancy, or duplication of components or circuits in a system is one way to increase the reliability of a system and safety-critical circuits are often redundantly supplied, so that if the primary circuit fails there is an equivalent secondary circuit that can be activated.

An IS system which has become increasingly popular for real-time distributed control systems, particularly in manufacturing plants with hazardous areas, is based on the IEC standard for intrinsically safe fieldbus systems (IEC 60079-27), which has become known as the Fieldbus Intrinsically Safe COncept (FISCO).

In a FISCO system, only one active source (a power conditioner or a power supply unit) is permitted per segment. All other components must act as passive current sinks (instruments). In systems that are required to prevent failure of all devices on a segment in case of maintenance, one or more redundant power supply units (PSU's) can be installed along with means for switching between the power supplies in the event that one fails or needs to be replaced.

In Europe, hazardous environments and explosion-proof areas are categorised into so-called Zones. A distinction is made between Zones 0, 1 and 2, Zone 0 being the most sensitive zone where a flammable atmosphere is highly likely to be present for long periods or continuously. In Zone 1 a flamable atmosphere is possible but unlikely to be present for long periods, and in Zone 2 a flammable atmosphere is unlikely to be present except for short periods of time, typically as a result of a process fault condition.

There are also three recognised categories of intrinsic safety for electrical apparatus, which correspond to these hazardous environment Zones: Intrinsic safety 'ia', or 'Ex ia' for short is equipment which is suitable for Zones 0, 1 and 2; 'Ex ib' equipment is only suitable for Zones 1 and 2; and 'Ex ic' equipment is only suitable for Zone 2 hazardous areas.

US2004/0252428 describes a device for IS, redundant current-voltage supply for electric loads in an explosion-proof area by use of current limiting resistors.

US2004/0145843 describes an active protection circuit using N-channel FETs to isolate and sequence the connection of two or more power supplies to a common load, with voltage sensing of the supplies and reverse bias sensing to operate a controller.

US2004/0252428 discloses a method of multiplexing a plurality of intrinsically safe inputs for redundancy within explosion-proof areas, and WO03/041239 discloses a method of multiplexing a plurality of inputs for intrinsically safe operation through the use of current-limiting resistive elements.

Amongst the problems associated with known IS redundant systems and methods is that they do not guarantee that only one input supply is connected to the load during a changeover of supplies. What is needed is a system having guaranteed full disconnection of all input supplies from the load during changeover to ensure no unsafe condition, i.e. more than one input supply connected to the output load at the same time, can occur.

It is therefore an object of the present invention to provide a method and a system meeting the requirements of the so-called Redundant FISCO PSU scheme, which requires that two FISCO PSU's be operated in a standby redundant configuration, whilst their load is mounted in a Zone 1 or Zone 2 hazardous area, and which guarantees that a maximum of one of the input supplies is connected to the output load at any point in time.

The present invention is particularly suitable for implementation in FISCO systems, and providing redundant PSU's for such systems, although is not limited as such.

The present invention seeks to provide a method for the multiplexing of IS outputs for the purposes of functional redundancy of IS circuits, and a multistage switching apparatus to implement the multiplexer for IS outputs.

According to a first aspect of the present invention there is provided a method of multiplexing a plurality of intrinsically safe inputs for the purpose of functional redundancy using: a plurality of switching modules connected to an intrinsically safe output; and a plurality of substantially identical inputs from a plurality of intrinsically safe input sources to the plurality of respective switching modules; wherein a plurality of interlock signals between each of the switching modules are employed to permit a maximum of one of the switching modules to be active at any point in time, thereby permitting a maximum of one of the plurality of inputs from the plurality of input sources to be connected to the intrinsically safe output; and further including the step of providing a guaranteed minimum period where no input is connected to the intrinsically safe output during switching to an alternative switching module.

Preferably two switching modules are used so that, in use, one switching module is active whilst the other is redundant.

The guaranteed minimum period, where no input is connected to the intrinsically safe output during the switching to an alternative switching module, is preferably at least lOps (or whatever minimum period is required to ensure or demonstrate safety) and has a maximum period of 500ps (or whatever maximum period is required to ensure that there is no adverse functional affect on any of the connected field equipment).

Preferably the output is automatically switched to an alternative switching module if the input of the active switching module or the active switching module itself fails.

Each one of the plurality of switching modules and each one of the plurality of intrinsically safe input sources is preferably removable whilst at least one of the inputs is connected to the intrinsically safe output. This means that components can be serviced or replaced whilst still powering one or more IS devices connected to the output.

A mechanical interlock is preferably provided for each switching module which is arranged to prevent the removal of the switching module whilst the associated input is present. This advantageously prevents any transient combination of inputs and simplifies the failure analysis and electronic design of the switching module.

Each of the plurality of inputs preferably comprises a regulated current and/or voltage from an intrinsically safe power source, in particular a FISCO PSU. By ensuring that the inputs are from intrinsically safe sources the output is suitable for driving an 'Ex ib' field circuit.

Preferably the logic circuits controlling hazardous logic functions and non-hazardous logic functions are physically separated. In a particularly advantageous arrangement the hazardous logic functions are implemented using discrete logic and the non-hazardous logic functions are implemented on a single chip microprocessor.

According to a further aspect of the present invention there is provided a switching circuit for multiplexing a plurality of intrinsically safe inputs comprising: a plurality of switching modules connected to an intrinsically safe output, each switching module being arranged to receive one of a plurality of substantially identical inputs; each switching module comprising locking means arranged to permit a maximum of one of the plurality of inputs to be connected to the intrinsically safe output at any point in time; wherein the locking means is further arranged to provide a guaranteed minimum period where no input is connected to the intrinsically safe output during switching to an alternative switching module.

The locking means preferably comprises a plurality of locking signals between each of the plurality of switching modules.

Preferably the output remains intrinsically safe with a minimum of one countable fault applied to the switching circuit.

According to a further aspect of the present invention there is provided a system for multiplexing a plurality of intrinsically safe inputs for the purpose of functional redundancy comprising: a plurality of input sources; a switching circuit comprising: a plurality of switching modules connected to an intrinsically safe output, each module being arranged to receive one of a plurality of substantially identical inputs from the plurality of input sources; each switching module comprising locking means arranged to permit a maximum of one of the plurality of inputs to be connected to the intrinsically safe output at any point in time; wherein the locking means is further arranged to provide a guaranteed minimum period where no input is connected to the intrinsically safe output during switching to an alternative switching module.

The invention is described further hereinafter, by way of example only, with reference to the accompanying drawings in which:

Fig. 1 is a simplified schematic block diagram of a dual redundant FISCO PSU scheme according to one embodiment of the present invention;

Fig. 2 is a generalised logic block diagram of a dual redundant FISCO PSU scheme according to one embodiment of the present invention;

Fig. 3 is a more detailed logic diagram of a dual redundant FISCO PSU scheme according to one embodiment of the present invention;

Fig. 4 is a schematic diagram for a simple logic simulation of a dual redundant FISCO PSU scheme according to one embodiment of the present invention; and

Fig.5 is a series of plots obtained from running a simulation on the logic simulation of Fig. 4.

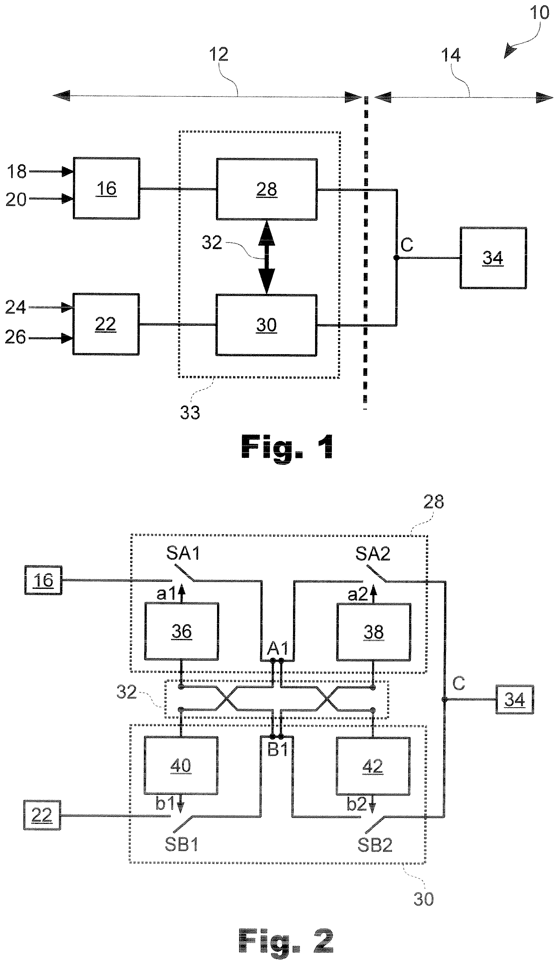

With reference to Fig. 1, there is shown a scheme by which two FISCO PSU devices can be connected to the same electrical system in a dual redundant configuration which is suitable for driving an 'Ex ib' field circuit. The system 10 is divided into two physical areas; a safe area 12 and a Zone 1 hazardous area 14. Within the safe area 12 a first FISCO PSU (PSU_A) 16 and a second FISCO PSU (PSU_B)22 are connected to a first Switch Arbitration Module (SAM) 28 and a second SAM 30 respectively. PSU_A 16 is driven by a first local power source 18 and coupled to a first communications port 20. Likewise, PSU_B 22 is driven by a second local power source 24 and coupled to a second communications port 26. The SAM's 28, 30 are connected together by backplane interlock signals 32 to form an IS switching circuit 33. The outputs from the SAM's 28, 30 are connected in common to an 'Ex ib' load 34 in the hazardous area 14.

The IS switching circuit 33 is designed to respond to PSU failures by switching to select a functional PSU 16, 22. The system 10 is designed to allow the repair, replacement or removal of a failed PSU or SAM whilst the system 10 continues to function. Interlocks are included to ensure that only one PSU is connected to the hazardous area load 34 at any time.

To maintain adequate protection against transient combination of the PSU's during live maintenance, each SAM includes a mechanical interlock which prevents the removal or insertion of the SAM whilst the associated PSU is present. This ensures that a SAM can never be removed or replaced whilst it is powered. Thus when 'hot swapping' a SAM it is guaranteed that the SAM is unpowered. The interface signal from the other SAM will however remain active.

The implementation of the logic within each SAM is divided into two distinct sections, 'functional logic' and 'hazardous logic'. For safety, the hazardous logic section is implemented using discrete logic components, however the function logic sections can most efficiently be implemented using a single chip microprocessor (MPU).

Fig. 2 illustrates a generalised implementation of the IS switching circuit 33 in accordance with the present invention, where like elements are identified with like reference numerals. The first SAM 28 comprises logic block 36 which controls a switch SA1 via signal a1, and logic block 38 which controls a switch SA2 via signal a2. The second SAM 30 comprises logic block 40 which controls a switch SB1 via signal b1, and logic block which controls a switch SB2 via signal b2. The two SAM's 28, 30 are interconnected by an interface comprising interlock signals 32.

The protective functionality of the SAM is:

> a) to prevent the hazardous combination of the two FISCO PSU's 16, 22 onto the field circuit 34; and
> b) to provide a break before make' action with a guaranteed minimum 'off period' during which neither PSU_A 16 nor PSU_B 22 are connected to the load during a changeover.

Because it is intended that the field circuit is to be approved 'Ex ib', such level of protection must be maintained with a maximum of one countable fault applied to the combination of the two interconnected SAM's 28, 30 and their interlocking signal connections 32, where the one countable fault could be an open circuit, a short circuit, or failure to another resistance value. With this in mind, the following design rules are defined with the intention of minimising the risk of unforeseen logic faults or logic states:

> a) the logic is to be designed as a state machine;
> b) all states are to be declared;
> c) the state in which all four logic blocks 36, 38, 40 and 42 are on simultaneously will be a 'disallowed' state which is never entered via any state transition which would occur in normal operation or with a single countable fault applied. Should such a state occur, the state machine is arranged to immediately and unconditionally attempt to transfer to a safer state which has at least two of the four logic block 36, 38, 40, 42 switches 'off';
> d) states in which any three logic blocks 36, 38, 40, 42 are 'on' simultaneously will be 'disallowed' states which are never entered into via any state transition which would occur in normal operation. Should such a state occur, the state machine is arranged to immediately and unconditionally attempt to transfer to a safer state which has at least two of the four logic block 36, 38, 40, 42 switches 'off';
> e) each switch logic block 36, 38, 40, 42 is arranged to be protected by logic supply under-voltage detectors and overvoltage clamps; and
> f) each semiconductor power switch SA1, SA2, SB1, SB2 within each SAM 28, 30 is arranged to default to 'normally off' with no power applied to the logic.

Two possible state machine implementations of the generalised SAM implementations as shown in Fig. 2 are considered. The first implementation uses only the sensed voltages of the intermediate trunks A1, B1 and the output trunk C. The second uses signals a1, a2, b1, b2 ('a1 and b2' gating) to better control unwanted transient states and ensure these are forced to the idle state. Although this extra control is not considered essential for an adequate 'Ex ib' solution, it is preferred to increase protection. However, 'a1 and b2' gating cannot be used if the SAM is made hot-swappable due to unlimited open circuit interface failures.

Using the design rules, the following symmetrical protection logic equations can be derived for implementation in the circuit of Fig. 2 when transferring signals a1, a2, b1, b2 across the interface ('a1 and b2' gating):

$$a1+ = \overline{B1} \bullet \overline{b2}(A1 + \overline{C})$$

$$a2+ = \overline{B1} \bullet \overline{b2} \bullet A1$$

$$b1+ = \overline{A1} \bullet \overline{a2}(B1 + \overline{C})$$

$$b2+ = \overline{A1} \bullet \overline{a2} \bullet B1$$

Wherein:

$\overline{B1}$ = Logical inverse of $B1$
$a1+$ = next state of $a1$
$\bullet$ = Logical AND of terms
$+$ = Logical OR of terms

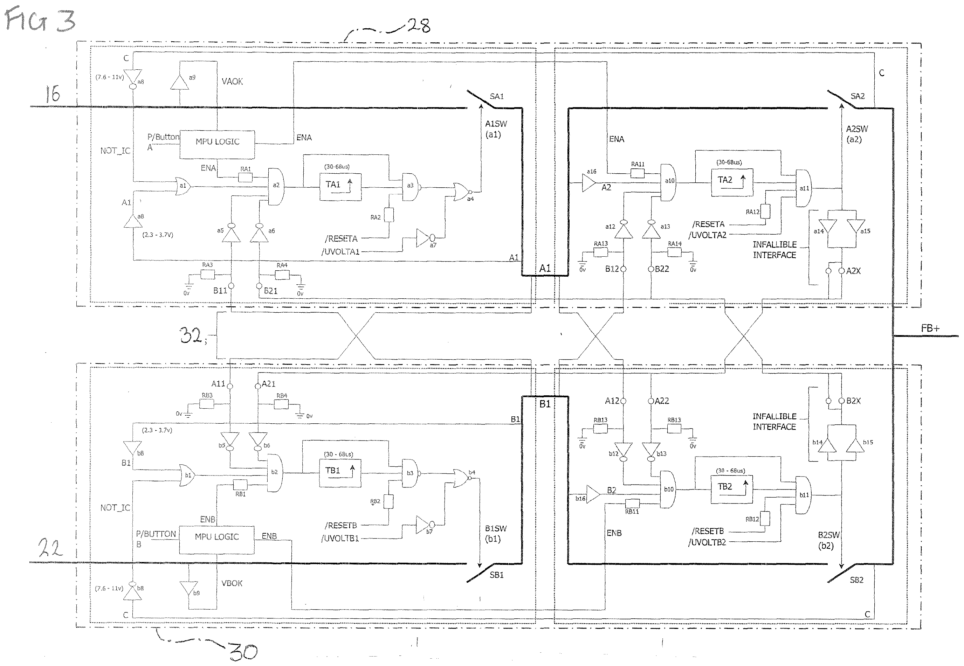

Fig. 3 is a generalised logic block diagram of the IS switching circuit 33 of Fig. 1 implementing the safety logic equations above. As illustrated in Figs. 1 and 2, the system comprises a first SAM module 28 and a second SAM module 30, connected by interconnection signals 32. The connections shown in bold indicate the routes by which power flows from PSU_A 16 and PSU_B 22 to the hazardous area load 34.

Voltage detectors a9, b9 are functional (non-safety) components that determine the adequacy of the PSU input voltages and signal this as logic signals $V_{AOK}$, $V_{BOK}$. These signals, and those from manual pushbutton A 36 and pushbutton B 38, are provided to the functional logic blocks $MPU_A$ and $MPU_B$ implemented in microprocessors which may turn off the local switches SA1, SA2 and SB1, SB2 using the functional signals ENA and ENB respectively. Although not shown, the voltage detectors a9, b9 may exchange signals in order to determine the outputs $V_{AOK}$, $V_{BOK}$.

Switches SA1, SA2 and SB1, SB2 are semiconductor switches controlled by logic signals a1, a2 and b1, b2 respectively. The switches are designed to be normally open in the event the local logic power supply fails.

Under-voltage detectors (not shown) provide inverted logic signals $U_{VOLTA1}$, $U_{VOLTA2}$ and $U_{VOLTB1}$, $U_{VOLTB2}$ which force the associated switches open if the local logic supply is under-voltage.

The $MPU_A$ and $MPU_B$ logic functions have associated watchdog detectors that provide inverted outputs $RESET_A$ and $RESET_B$ respectively. These are functional logic signals that cause the semiconductor switches SA1, SA2 and SB1, SB2 to be forced off if the associated microprocessor is reset.

Logic gates a1, a2, a10 and b1, b2, b10 and associated inverters and buffers implement the state transition equations as described above.

Timers TA1, TA2 and TB1, TB2 are asymmetrical timing circuits which delay positive-going inputs by 30μs to 68μs, but which have nearly zero delay for negative-going inputs. With the associated gating (e.g. a3 and a4 for TA1) these timers are responsible for providing a guaranteed 'break before make' break time. The multiple timers ensure that this delay is guaranteed even when a countable fault is applied.

Intermediate trunk voltage detectors a8, a16, a12, a5 and b8, b16, b12, b5 detect if the relevant trunk voltage exceeds a threshold voltage in the range 2.3V to 3.7V. The low voltage threshold ensures that the interlock signals are valid once there is sufficient trunk voltage to power the 5V logic, and thus ensures only one switch module can be 'on' at any one time, for trunk voltages exceeding 4.5V (the minimum operating logic supply). Output trunk voltage detectors 17, 17 detect if the output trunk voltage exceeds a threshold voltage in the range of 7.6V to 11V. A relatively high voltage is selected to minimise switching delays when there is little field load and thus the fieldbus line termination capacitance discharges slowly when the power is removed.

Drivers a14, a15 and b14, b15 provide outputs allowing the 'a2 and b2' gating function. The driver design is such that the output cannot fail 'off' (low) with any single countable fault applied.

Resistors RA1 to RA14 and RB1 to RB14 provide infallible protection between the functional circuitry and the hazardous area protection logic. The resistor values are chosen so that any short circuit condition within the functional logic cannot cause a hazardous failure within the hazardous area protection function.

A1 and B1 gating (via a5, a12 and b5, b12 respectively) is implemented by routing the intermediate trunks A1 & B1 via a carrier. An open circuit failure of the output connections will cause loss of the interlock signals 32, but simultaneously disconnects power to the hazardous area 14 .

The logic control for switches SA2 and SB2 is 'cascade' operated from the output of the logic control for switches SA1 and SA2 respectively. This implements a 'Gray-coded' sequence when each switch is turning on.

The following description relates to the various layers of hazardous area protection.

Logic items a5, a2, a3, a4, SA1, b5, b2, b3, b4, SB1 form a bistable which only allows SA1 or SA2 to be turned on at any one time.

Any single countable fault applied to any of the items may cause a change of state but cannot cause both SA1 and SA2 to be (statically) conducting at any one point in time.

The logic supply under-voltage detectors not-$U_{VOLTA1}$ and not-$U_{VOLTA2}$ operate at voltages less than 4.5V so at the time at which the logic is guaranteed to be powered the trunk voltage detectors a5, b5 will have valid outputs and thus bistable operation is guaranteed.

Logic items a16, a12, a10, a11, SA2, b16, b12, b10, b11, SB2 have a function that is primarily related to transient performance as explained in more detail below. However, a secondary protection function is also provided by this logic. The logic is such that should the opposing intermediate trunk A1 or B1 be 'on' then switch SA2 or SB1 will be turned off. This logic also ensures that the flip-flop formed by SA1 and SB1 never has its two outputs A1 and B1 connected together and so can operate as a bistable. Should either SA2 or SB2 logic fail, and then place SA2 or SB2 in an 'on' condition whilst the other SAM in on, reverse conduction via the failed SA2 or SB2 (to A1 or B1) will cause the switch to change state and thus transfer from a 'three switch on' state to a 'two switch on' state.

Logic gating provided by a6, a2, a13, a10, a14, a15, b6, b2, b13, b10, bl4, b15 implements the 'a2 and b2' gating function as described above. The purpose of the gating is primarily designed to help prevent the occurrence of unwanted transient states by recognising the unwanted transient states and to cause a state transition to a safer idle state. However it also provides additional protection against the occurrence of static dangerous states.

The outputs, interconnections and inputs are designed not all to fail to 'off' for any single countable fault.

Timers TA1 and TB1 provide delays which ensure a guaranteed minimum 'break' period when the switches change state. A countable fault applied to either timer TA1 or TB1 will defeat this protection when state changes occur in the one direction or the other. However Timers TA2 and TB2 operate in tandem with TA1 and TB1 and ensure that the changeover break delay occurs irrespective of a countable fault applied to TA1 or TB1.

The bistable formed by SA1 and SB1 can in principle enter a transient unstable state with both switches SA1 and SB1 on, even with TA1 and TB1 operating correctly. Timers TA2 and TB2 prevent the transients on trunks A1 and B1 from propagating to the output C. Even if TA1 or TB1 are faulted by a single countable fault the transient may only propagate via one of the SAM modules but not both.

Switch SA2 (and SB2) is operated sequentially with respect to SA1 (and SB1) when turning on. This is by virtue of sensing the state of A1 (and B1) via logic item a16 (and b16). This sequence is intended to minimise 'on' transients propagating to the output. The coding is not strictly Gray coded because when turning off, both switches SA1 and SA2 (and SB1 and SB2) are turned off simultaneously, which appears to be safest. The sequencing is fallible when a single countable fault is applied.

Logic items a8 and b8 sense the output trunk C and during changeover prevent a switch turning on until the output trunk voltage has fallen below a threshold voltage in the range 7.6V to 11V. This will effectively provide sequencing so that the disconnection of the previously active switch is (to some extent) confirmed, before the other switch can turn on. The protection may be defeated by application of a single countable fault.

As described above, the system, must guarantee a 'break before make' changeover between the two PSU's, with a guaranteed disconnection (break) interval. The magnitude of the minimum break interval is dependent on the worst case propagation delays through the various critical circuits for a SAM turning off and turning on. For safety the design must ensure that the minimum time delay to turn on always exceeds the maximum delay to turn off and the difference between these two delays represents a guaranteed break interval. By design this interval must exceed 10μs, which is the period in which it is generally understood that any potentially incendive condition is likely to have decayed to a point at which the reconnection of another PSU will not result in an increased risk of incendive hazard. However, the interval must not exceed 500ps for Fieldbus applications, this being the maximum acceptable dropout interval.

With respect to Fig. 3, the following table shows the calculated time delays for turning on and off for each safety component in the SAM.

| Safety Component | Logic items in class | Maximum delay to switch off | Minimum delay to switch on |
|---|---|---|---|
| Input Sensing | a8,a5,a6,a12,a13; b8,b5,b6,b12, b13 | 2.6μs | 0μs |

(continued)

| Safety Component | Logic items in class | Maximum delay to switch off | Minimum delay to switch on |
|---|---|---|---|
| 'a2 and b2' output | a14,a15; b14,b15 | 0.1µs | 0µs |
| Timers | a1,a2,TA1,a3,a4; b1,b2,TB1,b3,b4 | 0.3µs | 30µs |
| FET Switch | SA1,SA2; SB1,SB2 | 10µs | 0µs |
| TOTAL | | 13ps | 30µs |

The table shows that the minimum break margin (assuming that one timer has failed and the other provides minimum delay) = 30µs - 13µs = 17µs. This exceeds the minimum break delay required.

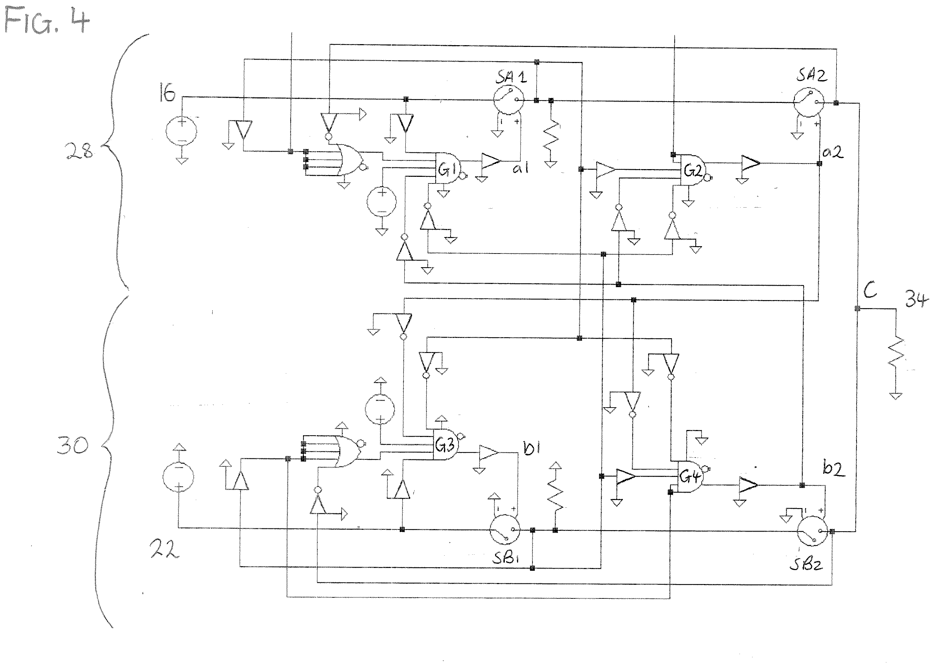

Fig. 4 shows a schematic for a simple logic simulation of the SAM logic equations. The logic and gate voltages of the switches are normalised to logic voltages of 1V, with thresholds at 0.5V. PSU_A 16 and PSU_B 22 are normalised to a supply of 5V.

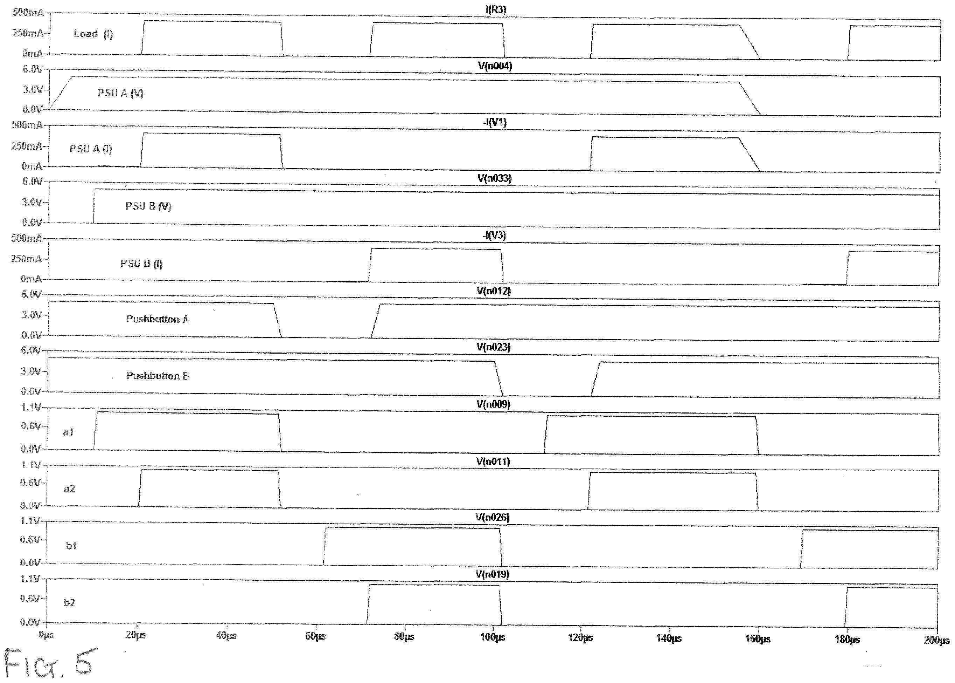

The asymmetrical timers are implemented by defining rise times of 20µs for gates G1, G2, G3, G4, effectively normalising each timer as 10µs (50% threshold). The resultant plots for normal operation are shown in Fig. 5.

The plots in Fig. 5 show the effects of a number of events on the state of the interconnected SAM's. In the simulation PSU_A 16 powers up before PSU_B 22, so switch control signals a1 and a2 are sequenced 'on' to connect PSU_A to the load via SA1 and SA2.

Pushbutton A 36 is then operated to cause a1 and a2 to go low, disconnecting PSU_A 16 from the load and then b1 and b2 are sequenced 'on' to connect PSU_B 22 to the load via SB1 and SB2.

Pushbutton B 38 is then operated causing b1 and b2 to go low and sequencing a1 and a2 on. Finally, PSU_A 16 fails low causing a1 and a2 to go low and b1 and b2 are sequenced on to bring PSU_B 22 on-line.

The break delays in the simulation can be seen to be around 20µs at each changeover, equivalent to a 10µs delay from each of the gates G1, G2, G3, G4, based on a 20µs rise time and a 50% threshold.

As will be appreciated, the present invention can provide for a particularly efficient and reliable scheme for providing redundant power in an intrinsically safe system. The intrinsic safety is guaranteed at least in part by the fact that the connected power supply is fully disconnected from the output before an alternative input is connected to the output.

The present invention is not limited to the specific details of the foregoing embodiments and alternatives, such as using the invention for any intrinsically safe inputs rather than FISCO PSU's, are included as part of the inventive concept.

**Claims**

1. A method of multiplexing a plurality of intrinsically safe inputs for the purpose of functional redundancy using:

   a plurality of switching modules (28, 30) connected to an intrinsically safe output (34); and
   a plurality of substantially identical inputs from a plurality of intrinsically safe input sources (18, 20; 24, 26) to the plurality of respective switching modules (28, 30); **characterised in that** a plurality of interlock signals between each of the switching modules are employed to permit a maximum of one of the switching modules to be active at any point in time, thereby permitting a maximum of one of the plurality of inputs from the plurality of input sources to be connected to the intrinsically safe output; and further including the step of
   providing a guaranteed minimum period where no input is connected to the intrinsically safe output during switching to an alternative switching module.

2. The method according to Claim 1 comprising two switching modules (28, 30); and/or
   wherein the guaranteed minimum period where no input is connected to the intrinsically safe output during the switching to an alternative switching module is at least the time required to eliminate the possibility of a hazardous combination or the time required to demonstrate (during test) that all sources are disconnected from the load.

3. The method according to Claims 1 or 2, wherein the guaranteed minimum period where no input is connected to the intrinsically safe output during the switching to an alternative switching module has a maximum period dependent on the dropout characteristics of the connected IS load devices.

4. The method according to Claims 1, 2 or 3, and
further comprising the step of automatically switching to an alternative switching module if the input of the active switching module fails.

5. The method of Claim 1, 2, 3 or 4, and further comprising the step of automatically switching to an alternative switching module if the active switching module fails.

6. The method of Claim 1, 2, 3, 4 or 5, wherein each one of the plurality of switching modules (28, 30) and each one of the plurality of intrinsically safe input sources is removable whilst at least one of the inputs is connected to the intrinsically safe output.

7. The method according to Claim 1, 2, 3, 4, 5 or 6, further including the step of providing a mechanical interlock for each switching module arranged to prevent the removal of the switching module whilst the associated input is present.

8. The method according to Claim 1, 2, 3, 4, 5, 6 or 7,
wherein each of the plurality of inputs comprises a regulated current and/or voltage from an intrinsically safe power source (16, 22); and optionally
wherein each of the plurality of power sources (16, 22) comprises a FISCO PSU.

9. The method according to any of Claims 1 to 8, wherein the output is suitable for driving an 'Ex ib' field circuit.

10. The method according to any of Claims 1 to 9, further comprising the step of physically separating logic circuits controlling hazardous logic functions and non-hazardous logic functions; and optionally
further comprising the step of implementing the hazardous logic functions using discrete logic and the non-hazardous functions on a single chip microprocessor.

11. A switching circuit (33) for multiplexing a plurality of intrinsically safe inputs (18, 20; 24, 26) comprising:

a plurality of switching modules (28, 30) connected to an intrinsically safe output, each switching module being arranged to receive one of a plurality of substantially identical inputs;
each switching module comprising locking means (32) arranged to permit a maximum of one of the plurality of inputs to be connected to the intrinsically safe output at any point in time; **characterised in that** the locking means is further arranged to provide a guaranteed minimum period where no input is connected to the intrinsically safe output during switching to an alternative switching module.

12. The switching circuit (33) according to Claim 11, comprising exactly two switching modules (28, 30); or
wherein the locking means comprises a plurality of locking signals (32) between each of the plurality of switching modules.

13. The switching circuit (33) according to Claim 11 or 12, wherein the guaranteed minimum period where no input is connected to the intrinsically safe output during the switching to an alternative switching module is at least the time required to eliminate the possibility of a hazardous combination or the time required to demonstrate (during test) that all sources are disconnected from the load; and/or
wherein the guaranteed minimum period where no input is connected to the intrinsically safe output during the switching to an alternative switching module has a maximum period of dependent on the dropout characteristics of the connected IS load devices; and/or
wherein, in use, the switching circuit is arranged to automatically switch to an alternative switching module if the input of the active switching module fails.

14. The switching circuit (33) according to any of Claims 11 to 13 wherein, in use, the switching circuit is arranged to automatically switch to an alternative switching module if the active switching module fails; and/or
wherein, in use, the switching circuit is arranged to switch to an alternative switching module in response to an external command.

15. The switching circuit according to any one of Claims 11 to 14, wherein, in use, each one of the plurality of switching modules is removable from the switching circuit whilst at least one of the other switching circuits is connected to the output; and optionally
wherein each of the plurality of switching modules comprises a mechanical interlock arranged to prevent the removal of the switching module whilst the associated input is present.

16. The switching circuit (33) according to any of Claims 11 to 15, wherein the plurality of inputs comprise a regulated current and/or voltage from an intrinsically safe power source (16, 22); and optionally wherein the intrinsically safe power source is a FISCO PSU.

17. The switching circuit (33) according to any of Claims 11 to 16, wherein the output is suitable for driving an 'Ex ib' field circuit.

18. The switching circuit (33) according to any of Claims 11 to 17, wherein logic circuits controlling hazardous logic functions in the switching circuit is physically separate from the logic circuits controlling non-hazardous logic functions; and optionally wherein the hazardous logic functions are implemented using discrete logic and the non-hazardous functions are implemented on a single chip microprocessor.

19. A system for multiplexing a plurality of intrinsically safe inputs for the purpose of functional redundancy comprising a plurality of input sources, and a switching circuit (33) as claimed in any one or more of Claims 11 to 18.

**Patentansprüche**

1. Verfahren zum Multiplexen einer Mehrzahl von eigensicheren Eingängen zwecks funktioneller Redundanz mit Hilfe von:

    einer Mehrzahl von Schaltmodulen (28, 30), die mit einem eigensicheren Ausgang (34) verbunden sind; und einer Mehrzahl von im Wesentlichen identischen Eingängen von einer Mehrzahl von eigensicheren Eingangsquellen (18, 20; 24, 26) zu der Mehrzahl von jeweiligen Schaltmodulen (28, 30); **dadurch gekennzeichnet, dass** eine Mehrzahl von Verriegelungssignalen zwischen den einzelnen Schaltmodulen verwendet wird, um es zuzulassen, dass jeweils immer maximal eines der Schaltmodule aktiv ist, um es dadurch zuzulassen, dass maximal einer aus der Mehrzahl von Eingängen aus der Mehrzahl von Eingangsquellen mit dem eigensicheren Ausgang verbunden wird; und das ferner den Schritt des Bereitstellens einer garantierten Mindestperiode beinhaltet, in der beim Schalten auf ein alternatives Schaltmodul kein Eingang mit dem eigensicheren Ausgang verbunden ist.

2. Verfahren nach Anspruch 1, das zwei Schaltmodule (28, 30) umfasst; und/oder wobei die garantierte Mindestperiode, in der beim Schalten auf ein alternatives Schaltmodul kein Eingang mit dem eigensicheren Ausgang verbunden ist, wenigstens die Zeit ist, die zum Eliminieren der Möglichkeit einer gefährlichen Kombination nötig ist, oder die Zeit, die zum Demonstrieren (während des Tests) nötig ist, dass alle Quellen von der Last abgetrennt sind.

3. Verfahren nach Anspruch 1 oder 2, wobei die garantierte Mindestperiode, in der beim Schalten auf ein alternatives Schaltmodul kein Eingang mit dem eigensicheren Ausgang verbunden ist, eine Höchstperiode hat, die von den Dropout-Charakteristiken der angeschlossenen IS-Lastgeräte abhängig ist.

4. Verfahren nach Anspruch 1, 2 oder 3, das ferner den Schritt des automatischen Schaltens auf ein alternatives Schaltmodul beinhaltet, wenn der Eingang des aktiven Schaltmoduls ausfällt.

5. Verfahren nach Anspruch 1, 2, 3 oder 4, das ferner den Schritt des automatischen Schaltens auf ein alternatives Schaltmodul beinhaltet, wenn das aktive Schaltmodul ausfällt.

6. Verfahren nach Anspruch 1, 2, 3, 4 oder 5, wobei jedes aus der Mehrzahl von Schaltmodulen (28, 30) und jede aus der Mehrzahl von eigensicheren Eingangsquellen entfernbar ist, während wenigstens einer der Eingänge mit dem eigensicheren Ausgang verbunden ist.

7. Verfahren nach Anspruch 1, 2, 3, 4, 5 oder 6, das ferner den Schritt des Bereitstellens einer mechanischen Verriegelung für jedes Schaltmodul beinhaltet, ausgelegt zum Verhindern des Entfernens des Schaltmoduls, während der assoziierte Eingang vorhanden ist.

**8.** Verfahren nach Anspruch 1, 2, 3, 4, 5, 6 oder 7,
wobei jeder aus der Mehrzahl von Eingängen eine(n) regulierte(n) Strom und/oder Spannung von einer eigensicheren Leistungsquelle (16, 22) umfasst; und wobei optional
jede aus der Mehrzahl von Leistungsquellen (16, 22) ein FISCO-Netzteil umfasst.

**9.** Verfahren nach einem der Ansprüche 1 bis 8, wobei der Ausgang zum Ansteuern einer ‚Ex ib' Feldschaltung geeignet ist.

**10.** Verfahren nach einem der Ansprüche 1 bis 9, das ferner den Schritt des physischen Trennens von Logikschaltungen beinhaltet, die gefährliche Logikfunktionen und ungefährliche Logikfunktionen steuern; und das ferner optional den Schritt des Implementierens der gefährlichen Logikfunktionen mit diskreter Logik und der ungefährlichen Funktionen auf einem Einchip-Mikroprozessor beinhaltet.

**11.** Schaltkreis (33) zum Multiplexen einer Mehrzahl von eigensicheren Eingängen (18, 20; 24, 26), der Folgendes umfasst:

eine Mehrzahl von Schaltmodulen (28, 30), die mit einem eigensicheren Ausgang verbunden sind, wobei jedes Schaltmodul zum Empfangen von einem aus einer Mehrzahl von im Wesentlichen identischen Eingängen ausgelegt ist;
wobei jedes Schaltmodul Verriegelungsmittel (32) umfasst, ausgelegt zum Zulassen, dass jeweils immer maximal einer aus der Mehrzahl von Eingängen mit dem eigensicheren Ausgang verbunden ist;
**dadurch gekennzeichnet, dass** das Verriegelungsmittel ferner zum Bereitstellen einer garantierten Mindestperiode ausgelegt ist, in der kein Eingang beim Schalten auf ein alternatives Schaltmodul mit dem eigensicheren Ausgang verbunden ist.

**12.** Schaltkreis (33) nach Anspruch 11, der genau zwei Schaltmodule (28, 30) umfasst; oder
wobei das Verriegelungsmittel eine Mehrzahl von Verriegelungssignalen (32) zwischen den einzelnen aus der Mehrzahl von Schaltmodulen umfasst.

**13.** Schaltkreis (33) nach Anspruch 11 oder 12, wobei die garantierte Mindestperiode, in der beim Schalten auf ein alternatives Schaltmodul kein Eingang mit dem eigensicheren Ausgang verbunden ist, wenigstens die Zeit ist, die zum Eliminieren der Möglichkeit einer gefährlichen Kombination nötig ist, oder die Zeit, die zum Demonstrieren (während des Tests) nötig ist, dass alle Quellen von der Last abgetrennt sind; und/oder
wobei die garantierte Mindestperiode, in der beim Schalten auf ein alternatives Schaltmodul kein Eingang mit dem eigensicheren Ausgang verbunden ist, eine Höchstperiode hat, die von den Dropout-Charakteristiken der angeschlossenen IS-Lastgeräte abhängig ist; und/oder
wobei beim Gebrauch der Schaltkreis zum automatischen Schalten auf ein alternatives Schaltmodul ausgelegt ist, wenn der Eingang des aktiven Schaltmoduls ausfällt.

**14.** Schaltkreis (33) nach einem der Ansprüche 11 bis 13, wobei beim Gebrauch der Schaltkreis zum automatischen Schalten auf ein alternatives Schaltmodul ausgelegt ist, wenn das aktive Schaltmodul ausfällt; und/oder
wobei beim Gebrauch der Schaltkreis zum Schalten auf ein alternatives Schaltmodul als Reaktion auf einen externen Befehl ausgelegt ist.

**15.** Schaltkreis nach einem der Ansprüche 11 bis 14, wobei beim Gebrauch jedes aus der Mehrzahl von Schaltmodulen von dem Schaltkreis entfernt werden kann, während wenigstens einer der anderen Schaltkreise mit dem Ausgang verbunden ist; und wobei optional
jedes aus der Mehrzahl von Schaltmodulen eine mechanische Verriegelung umfasst, ausgelegt zum Verhindern des Entfernens des Schaltmoduls, während der assoziierte Eingang vorhanden ist.

**16.** Schaltkreis (33) nach einem der Ansprüche 11 bis 15, wobei die Mehrzahl von Eingängen eine(n) regulierte(n) Strom und/oder Spannung von einer eigensicheren Leistungsquelle (16, 22) umfasst; und wobei optional
die eigensichere Leistungsquelle ein FISCO-Netzteil ist.

**17.** Schaltkreis (33) nach einem der Ansprüche 11 bis 16, wobei der Ausgang zum Ansteuern einer ‚Ex ib' Feldschaltung geeignet ist.

**18.** Schaltkreis (33) nach einem der Ansprüche 11 bis 17, wobei Logikschaltungen, die gefährliche Logikfunktionen im Schaltkreis steuern, von den Logikschaltungen physisch getrennt sind, die ungefährlichen Logikfunktionen steuern; und wobei optional
die gefährlichen Logikfunktionen mit diskreter Logik implementiert sind und die ungefährlichen Funktionen auf einem Einchip-Mikroprozessor implementiert sind.

19. System zum Multiplexen einer Mehrzahl von eigensicheren Eingängen zwecks funktioneller Redundanz, umfassend eine Mehrzahl von Eingangsquellen, und einen Schaltkreis (33) nach einem oder mehreren der Ansprüche 11 bis 18.

**Revendications**

1. Un procédé de multiplexage d'une pluralité d'entrées intrinsèquement sûres à des fins de redondance fonctionnelle au moyen de :

   une pluralité de modules de commutation (28, 30) raccordés à une sortie intrinsèquement sûre (34), et
   une pluralité d'entrées sensiblement identiques provenant d'une pluralité de sources d'entrée intrinsèquement sûres (18, 20; 24, 26) vers la pluralité de modules de commutation respectifs (28, 30),
   **caractérisé en ce qu'**une pluralité de signaux de verrouillage entre chacun des modules de commutation sont employés de façon à permettre à un maximum d'un des modules de commutation d'être actif à tout instant, permettant ainsi à un maximum d'une entrée de la pluralité d'entrées de la pluralité de sources d'entrée d'être raccordée à la sortie intrinsèquement sûre, et comprenant en outre l'opération suivante :
   la fourniture d'une période minimale garantie pendant laquelle aucune entrée n'est raccordée à la sortie intrinsèquement sûre au cours de la commutation vers un autre module de commutation.

2. Le procédé selon la Revendication 1 comprenant deux modules de commutation (28, 30), et/ou où la période minimale garantie pendant laquelle aucune entrée n'est raccordée à la sortie intrinsèquement sûre au cours de la commutation vers un autre module de commutation est au moins le temps nécessaire à l'élimination de la possibilité d'une combinaison hasardeuse ou le temps nécessaire à la démonstration (au cours d'un test) que la totalité des sources sont déconnectées de la charge.

3. Le procédé selon les Revendications 1 ou 2, où la période minimale garantie pendant laquelle aucune entrée n'est raccordée à la sortie intrinsèquement sûre au cours de la commutation vers un autre module de commutation possède une période maximale qui dépend des caractéristiques d'interruption des dispositifs de charge IS connectés.

4. Le procédé selon les Revendications 1, 2 ou 3, et comprenant en outre l'opération de commutation automatique vers un autre module de commutation si l'entrée du module de commutation actif échoue.

5. Le procédé selon la Revendication 1, 2, 3 ou 4, et comprenant en outre l'opération de commutation automatique vers un autre module de commutation si le module de commutation actif échoue.

6. Le procédé selon la Revendication 1, 2, 3, 4 ou 5, où chaque module de la pluralité de modules de commutation (28, 30) et chaque source de la pluralité de sources d'entrée intrinsèquement sûres est amovible pendant qu'au moins une des entrées est raccordée à la sortie intrinsèquement sûre.

7. Le procédé selon la Revendication 1, 2, 3, 4, 5 ou 6, comprenant en outre l'opération de fourniture d'un verrouillage mécanique destiné à chaque module de commutation agencé de façon à empêcher le retrait du module de commutation pendant que l'entrée associée est présente.

8. Le procédé selon la Revendication 1, 2, 3, 4, 5, 6 ou 7, où chaque entrée de la pluralité d'entrées comprend un courant et/ou une tension régulés provenant d'une source d'alimentation électrique intrinsèquement sûre (16, 22), et éventuellement où chaque source d'alimentation électrique de la pluralité de sources d'alimentation électriques (16, 22) comprend une PSU FISCO.

9. Le procédé selon l'une quelconque des Revendications 1 à 8, où la sortie est adaptée de façon à exciter un circuit inducteur 'Ex ib'.

**10.** Le procédé selon l'une quelconque des Revendications 1 à 9, comprenant en outre l'opération de séparation physique de circuits logiques commandant des fonctions logiques hasardeuses et des fonctions logiques non hasardeuses, et éventuellement

comprenant en outre l'opération de mise en oeuvre des fonctions logiques hasardeuses au moyen d'une logique discrète et des fonctions non hasardeuses sur un microprocesseur monopuce.

**11.** Un circuit de commutation (33) destiné au multiplexage d'une pluralité d'entrées intrinsèquement sûres (18, 20; 24, 26) comprenant :

une pluralité de modules de commutation (28, 30) raccordés à une sortie intrinsèquement sûre, chaque module de commutation étant agencé de façon à recevoir une entrée d'une pluralité d'entrées sensiblement identiques, chaque module de commutation comprenant un moyen de verrouillage (32) agencé de façon à permettre à un maximum d'une entrée de la pluralité d'entrées d'être raccordée à la sortie intrinsèquement sûre à tout instant, **caractérisé en ce que**

le moyen de verrouillage est agencé en outre de façon à fournir une période minimale garantie pendant laquelle aucune entrée n'est raccordée à la sortie intrinsèquement sûre au cours de la commutation vers un autre module de commutation.

**12.** Le circuit de commutation (33) selon la Revendication 11, comprenant exactement deux modules de commutation (28, 30), ou

où le moyen de verrouillage comprend une pluralité de signaux de verrouillage (32) entre chaque module de la pluralité de modules de commutation.

**13.** Le circuit de commutation (33) selon la Revendication 11 ou 12, où la période minimale garantie pendant laquelle aucune entrée n'est raccordée à la sortie intrinsèquement sûre au cours de la commutation vers un autre module de commutation est au moins le temps nécessaire à l'élimination de la possibilité d'une combinaison hasardeuse ou le temps nécessaire à la démonstration (au cours d'un test) que la totalité des sources sont déconnectées de la charge, et/ou

où la période minimale garantie pendant laquelle aucune entrée n'est raccordée à la sortie intrinsèquement sûre au cours de la commutation vers un autre module de commutation possède une période maximale qui dépend des caractéristiques d'interruption des dispositifs de charge IS connectés, et/ou

où, en utilisation, le circuit de commutation est agencé de façon à commuter automatiquement vers un autre module de commutation si l'entrée du module de commutation actif échoue.

**14.** Le circuit de commutation (33) selon l'une quelconque des Revendications 11 à 13 où, en utilisation, le circuit de commutation est agencé de façon à commuter automatiquement vers un autre module de commutation si le module de commutation actif échoue, et/ou

où, en utilisation, le circuit de commutation est agencé de façon à commuter vers un autre module de commutation en réponse à une commande externe.

**15.** Le circuit de commutation selon l'une quelconque des Revendications 11 à 14, où, en utilisation, chaque module de la pluralité de modules de commutation est amovible à partir du circuit de commutation pendant qu'au moins un des autres circuits de commutation est raccordé à la sortie, et éventuellement

où chaque module de la pluralité de modules de commutation comprend un verrouillage mécanique agencé de façon à empêcher le retrait du module de commutation pendant que l'entrée associée est présente.

**16.** Le circuit de commutation (33) selon l'une quelconque des Revendications 11 à 15, où la pluralité d'entrées comprend un courant et/ou une tension régulés provenant d'une source d'alimentation électrique intrinsèquement sûre (16, 22), et éventuellement

où la source d'alimentation électrique intrinsèquement sûre est une PSU FISCO.

**17.** Le circuit de commutation (33) selon l'une quelconque des Revendications 11 à 16, où la sortie est adaptée de façon à exciter un circuit inducteur 'Ex ib'.

**18.** Le circuit de commutation (33) selon l'une quelconque des Revendications 11 à 17, où des circuits logiques commandant des fonctions logiques hasardeuses dans le circuit de commutation sont physiquement séparés des circuits logiques commandant des fonctions logiques non hasardeuses, et éventuellement

où les fonctions logiques hasardeuses sont mises en oeuvre au moyen d'une logique discrète et les fonctions non hasardeuses sont mises en oeuvre sur un microprocesseur monopuce.

19. Un système de multiplexage d'une pluralité d'entrées intrinsèquement sûres à des fins de redondance fonctionnelle comprenant une pluralité de sources d'entrée, et un circuit de commutation (33) selon l'une quelconque ou plusieurs des Revendications 11 à 18.

**Fig. 1**

**Fig. 2**

FIG 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040252428 A
- US 20040145843 A

- WO 03041239 A